# EUROPEAN PATENT SPECIFICATION

(11) **EP 3 181 843 B1**
(45) Date of publication and mention of the grant of the patent: **27.02.2019**
(21) Application number: 16193679.4
(22) Date of filing: 13.10.2016
(51) Int. Cl.: F01N 3/021, F01N 3/035

(54) **CATALYZED PARTICULATE FILTER**
KATALYSIERTER PARTIKELFILTER
FILTRE À PARTICULES CATALYSÉ

(30) Priority: 14.12.2015 KR 20150178648
(43) Date of publication of application: 21.06.2017
(73) Proprietor: Hyundai Motor Company, Seoul (KR)
(72) Inventor: KIM, Pyung Soon, Suwon-si, Gyeonggi-do (KR); JUNG, ChangHo, Hwaseong-si, Gyeonggi-do, 18280 (KR)
(74) Representative: Viering, Jentschura & Partner mbB Patent- und Rechtsanwälte

(56) References cited:
- EP-A1- 2 154 343
- EP-A1- 2 659 950
- EP-A1- 2 737 945
- JP-A- 2003 205 245
- JP-A- 2003 307 115

## Description

### CROSS-REFERENCE TO RELATED APPLICATION

This application claims priority to and the benefit of Korean Patent Application No. 10-2015-0178648 filed on December 14, 2015.

### FIELD

The present disclosure relates to a catalyzed particulate filter, and more particularly, to a catalyzed particulate filter that can increase a contact time (area) of a catalyst and a fluid while minimizing an increase of a back pressure.

### BACKGROUND

Gas discharged from an internal combustion engine such as a diesel engine or various combustion devices includes a particulate matter (PM). When the PM is just ejected into the atmosphere, since environmental pollution is caused, a particulate filter for collecting the PM is mounted on an exhaust system of the discharge gas.

The particulate filter may be divided into a flow-through type particulate filter and a wall flow type particulate filter according to a flow of a fluid. According to the flow-through type particulate filter, the fluid that flows into one channel does not move to another channel and flows only in one channel. As a result, an increase of a back pressure is minimized, but a means for collecting the particulate matter included in the fluid may be required and a filter capability may deteriorate.

In the wall flow type particulate filter, the fluid that flows into one channel moves to another neighbor channel moves and thereafter, is discharged from the particulate filter through another channel. That is, the fluid that flows into an inlet channel moves to an outlet channel through a porous wall and is discharged from the particulate filter through the outlet channel again. When the fluid passes through the porous wall, the particulate matter included in the fluid cannot pass through the porous wall and is collected. The wall flow type particulate filter may slightly increase the back pressure, but is effective to filter the particulate matter. As a result, the wall flow type particulate filter is primarily used.

One or more catalytic converters are mounted on a vehicle together with the particulate filter. The catalytic converter is configured to purify carbon monoxide (CO), hydrocarbon (HC), and nitrogen oxide (NOx) included in exhaust gas. The catalytic converter may be mounted while being physically separated from the particulate filter and the particulate filter is coated with a catalyst, and as a result, the catalytic converter may be merged with the particulate filter. The particulate filter coated with the catalyst is also called a catalyzed particulate filter (CPF).

In the CPF, the porous wall that divides the inlet channel and the outlet channel is coated with the catalyst and the fluid contacts the coated catalyst while passing through the porous wall. A pressure difference is generated between the inlet channel and the outlet channel divided by the porous wall, and as a result, the fluid rapidly passes through the porous wall. Therefore, since the contact time of the catalyst and the fluid is short, a catalytic reaction cannot sufficiently occur.

In addition, when the catalyst coated on the porous wall is thick, the catalyst closes a micropore formed on the wall to obstruct the flow of the fluid from the inlet channel to the outlet channel. As a result, the back pressure increases. In order to minimize the increase of the back pressure, the catalyst is thinly coated with the wall in the CPF. As a result, since the amount of catalysts coated on the CPF is insufficient, the catalytic reaction cannot sufficiently occur.

In order to solve the problem, the number (density) of inlet channels and the outlet channels (hereinafter, collectively referred to as 'cells') are increased in order to increase the amount of surface area of the wall which may be coated with the catalyst. However, when the density of cells increases in a limited space, the thickness of the wall is reduced. The reduction of the thickness of the wall may degrade the filter capability. Therefore, the density of the cell cannot increase to a limit density or more.

The above information disclosed in this Background section is only for enhancement of understanding of the background of the present disclosure and therefore it may contain information that does not form part of the prior art that is already known in this field to a person of ordinary skill.

EP 2 154 343 A1 discloses a particle separator having different heat transfer areas in terms of heat storage capacity, heat conductivity or heat transfer characteristics of exhaust gas flows along the main flow direction of an exhaust gas flow through the particle separator.

EP 2 659 950 A1 discloses an exhaust after-treatment system consisting of exhaust gas particle filter arranged in the exhaust stream of an internal combustion engine.

JP 2003 205245 A discloses a filter catalyst for diesel exhaust gas purification provided with a filter main body which is a ceramic honeycomb structural body and has a gas inflow hole, a gas outflow hole and a filter partition in the gas passage, an auxiliary partition which at least divides the gas inflow holes to a plurality of auxiliary holes and gas purifying layers which are formed on the inside and/or the surface of the filter partition which at least partitions the gas inflow hole and the auxiliary partition.

EP 2 737 945 A1 discloses a honeycomb catalyst body which can be contained even in a limited space including a plugged honeycomb structure having porous partition walls which define and form cells extending from an inflow side end surface to an outflow side end surface, inflow side plugged portions provided at outflow side ends of predetermined cells, outflow side plugged portions provided at outflow side ends of remaining cells, and porous projecting portions which project so as to extend from the partition walls into the cells and are formed integrally with the partition walls; and catalyst loaded onto the projecting portions of the plugged honeycomb structure.

### SUMMARY

The present disclosure provides a catalyzed particulate filter which can increase a catalyst loading amount while minimizing an increase in back pressure. The catalyzed particulate filter can increase a contact time of a catalyst and a fluid while minimizing any increase in back pressure.

According to one aspect of the present disclosure, a catalyzed particulate filter as claimed in claim 1 is provided.

The support may extend in the longitudinal direction and extend from any one plane of the porous wall that partitions the inlet channel or the outlet channel to another plane other than a plane adjacent to the any one plane.

The support may extend in the longitudinal direction and extend from any one plane of the porous wall that partitions the inlet channel or the outlet channel to another corner other than a corner formed on the any one plane.

The support may include a first support which extends in the longitudinal direction and extends from any one plane of the porous wall that
partitions the inlet channel or the outlet channel to the any one plane and the other plane, and a second support which extends in the longitudinal direction and extends from any one plane and the other plane to the other plane or another plane. The first support and the second support may cross each other.

The support may extend in the longitudinal direction and extend from any one corner of the porous wall that partitions the inlet channel or the outlet channel to another corner other than a corner sharing a plane with the any one corner. The support may extend in the longitudinal direction and multiple supports may be provided in a diagonal direction of the porous wall that partitions the inlet channel or the outlet channel. The first support and the second support may cross each other.

The support may extend in the longitudinal direction and extend from any one plane of the porous wall that partitions the inlet channel or the outlet channel with a predetermined length and extend from any one plane and the other plane with a predetermined length. Any one plane and the other plane may be planes facing each other.

The support may extend in the longitudinal direction and extend from respective planes of the porous wall that partitions the inlet channel or the outlet channel with a predetermined length. The support may extend in the longitudinal direction and extend from respective corners of the porous wall that partitions the inlet channel or the outlet channel with a predetermined length.

The support may include a first support which extends in the longitudinal direction and extends from any one corner of the porous wall that partitions the inlet channel or the outlet channel to the another corner other than a corner sharing a plane with the any one corner, and a second support which extends to both sides of the first support with a predetermined length. The second support may extend at the center of the first support with a predetermined length.

The support may include a first support which extends in the longitudinal direction and extends from any one plane of the porous wall that partitions the inlet channel or the outlet channel to the another plane other than a plane adjacent to the any one plane, and a second support which extends to both sides of the first support with a predetermined length. The second support may extend at the center of the first support with a predetermined length. The support may be formed to be spaced apart at a predetermined interval in the longitudinal direction.

The support extends in the longitudinal direction and communication holes are formed in a part of the support which contacts the porous wall that partitions the inlet channel or the outlet channel at a predetermined interval.

The surface of the support may be coated with the catalyst.

The support may be positioned in at least one of the one or more inlet channels and positioned in at least one of the one or more outlet channels or positioned only in at least one of the one or more inlet channels or positioned only in at least one of the one or more outlet channels.

According to another, not claimed, aspect of the present invention, in a catalyzed particulate filter, an area of a support coated with a catalyst is increased to increase a contact area (time) of the catalyst and a fluid (exhaust gas), thereby improving a purification capability of the fluid by the catalyst. Simultaneously therewith, since resistance which the support applies to the fluid that flows on an inlet channel and an outlet channel can be minimized, an increase in back pressure can be minimized.

Further areas of applicability will become apparent from the disclosure provided herein.

### DRAWINGS

In order that the disclosure may be well understood, there will now be described various forms thereof, given by way of example, reference being made to the accompanying drawings, in which:
FIG. 1 is a perspective view of a catalyzed particulate filter according to the teachings of the present disclosure;
FIG. 2 is a cross-sectional view of the catalyzed particulate filter of FIG. 1;
FIG. 3 is a front view illustrating a partial inlet channel and a partial outlet channel of a catalyzed particulate filter according to one aspect of the present disclosure;
FIG. 4 is a front view illustrating a partial inlet channel and a partial outlet channel of a catalyzed particulate filter according to another aspect of the present disclosure.
FIG. 5 is a front view illustrating a partial inlet channel and a partial outlet channel of a catalyzed particulate filter according to another aspect of the present disclosure;
FIG. 6 is a front view illustrating a partial inlet channel and a partial outlet channel of a catalyzed particulate filter according to another aspect of the present disclosure;
FIG. 7 is a front view illustrating a partial inlet channel and a partial outlet channel of a catalyzed particulate filter according to another aspect of the present disclosure;
FIG. 8 is a front view illustrating a partial inlet channel and a partial outlet channel of a catalyzed particulate filter according to another aspect of the present disclosure;
FIG. 9 is a front view illustrating a partial inlet channel and a partial outlet channel of a catalyzed particulate filter according to another aspect of the present disclosure;
FIG. 10 is a front view illustrating a partial inlet channel and a partial outlet channel of a catalyzed particulate filter according to another aspect of the present disclosure;
FIG. 11 is a front view illustrating a partial inlet channel and a partial outlet channel of a catalyzed particulate filter according to another aspect of the present disclosure;
FIG. 12 is a front view illustrating a partial inlet channel and a partial outlet channel of a catalyzed particulate filter according to yet another aspect of the present disclosure;
FIGS. 13A and 13B are cross-sectional views of a catalyzed particulate filter according to yet another aspect of the present disclosure; and
FIGS. 14A and 14B are cross-sectional views of a catalyzed particulate filter according to the invention.

### DETAILED DESCRIPTION

The following detailed description is merely exemplary in nature, and is not intended to limit the present disclosure, application, or uses. Reference is made in detail to various forms of the present disclosure, examples of which are shown and described, simply by way of illustration. As those skilled in the art would realize, the described various forms may be modified in various different ways.

The drawings and description are to be regarded as illustrative in nature and not restrictive and like reference numerals designate like elements throughout the specification. Further, since size and thickness of each component illustrated in the drawings are arbitrarily represented for convenience in explanation, the present disclosure is not particularly limited to the illustrated size and thickness of each component and the thickness is enlarged and illustrated in order to clearly express various parts and areas.

A catalyzed particulate filter according to one aspect of the present disclosure may be applied to various devices which obtain energy by burning fossil fuel and discharge gas generated during such a process to the atmosphere as well as a vehicle. In the present disclosure, the catalyzed particulate filter is applied to a vehicle, without limitation, and it should not be construed that the catalyzed particulate filter is applied only to the vehicle.

An engine for generating power is mounted on the vehicle. The engine combusts mixed air in which fuel and air are mixed to convert chemical energy into mechanical energy. The engine is connected to an intake manifold to receive the air in a combustion chamber and connected to an exhaust manifold, and as a result, exhaust gas generated during a combustion process is collected in an exhaust manifold and thereafter, discharged to the outside of the vehicle. An injector is mounted on the combustion chamber or the intake manifold to inject the fuel into the combustion chamber or the intake manifold.

The exhaust gas generated by the engine is discharged to the outside of the vehicle through an exhaust device. The exhaust device may include an exhaust pipe and an exhaust gas recirculation (EGR) device. The exhaust pipe is connected to the exhaust manifold to discharge the exhaust gas to the outside of the vehicle.

The EGR device is mounted on the exhaust pipe, and as a result, the exhaust gas discharged from the engine passes through the EGR device. Further, the EGR device is connected to the intake manifold and mixes some of the exhaust gas with the air to control a combustion temperature. The combustion temperature is controlled by ON/OFF-controlling an EGR valve (not illustrated) provided in the EGR device. That is, the EGR valve is ON/OFF-controlled to control the amount of the exhaust gas supplied to the intake manifold.

The exhaust device may further include a particulate filter mounted on the exhaust pipe to collect a particulate matter included in the exhaust gas. The particulate filter may be a catalyzed particulate filter according to one aspect of the present disclosure for purifying harmful substances in addition to the particulate matter included in the exhaust gas.

Hereinafter, the catalyzed particulate filter according to one aspect of the present disclosure will be described in detail with reference to the accompanying drawings.

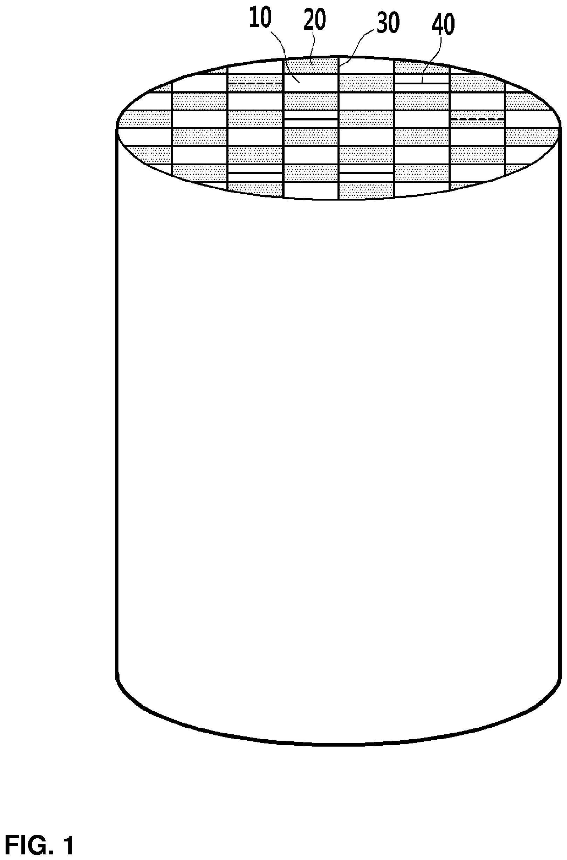

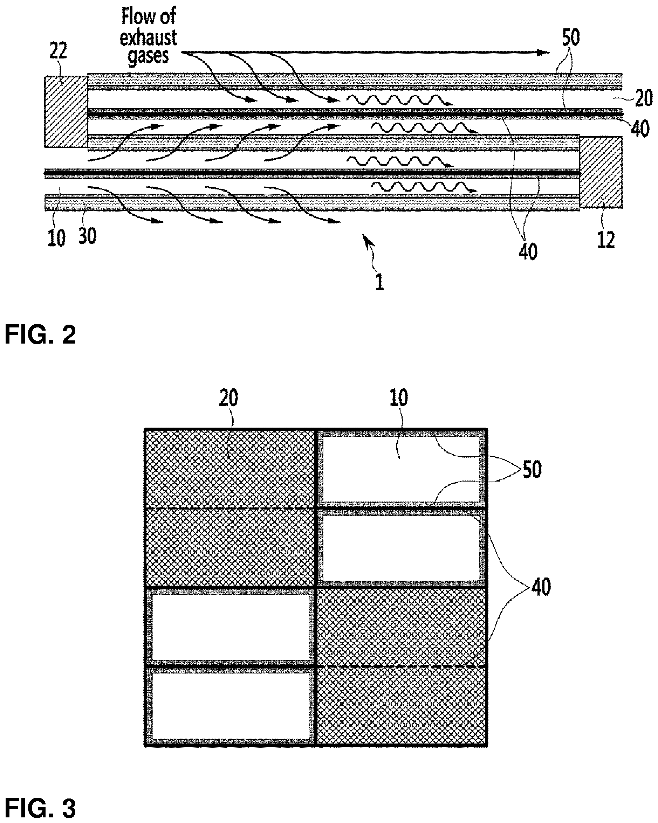

Referring to FIG. 1 a perspective view of a catalyzed particulate filter according one aspect of the present disclosure is provided. In FIG. 2, ia cross-sectional view of the catalyzed particulate filter according to FIG. 1 is shown. In FIG. 3 a front view illustrating a partial inlet channel and a partial outlet channel of a catalyzed particulate filter according to one aspect of the present disclosure is provided.

As illustrated in FIG. 1, the catalyzed particulate filter 1 according to one aspect of the present disclosure includes one or more inlet channels 10 and one or more outlet channels 20 in a housing. The plurality of inlet channels 10 and outlet channels 20 are partitioned by a wall 30. Further, a support 40 may be disposed in one or more channels of one or more inlet channels 10 and one or more outlet channels 20.

In the present disclosure, both the inlet channels 10 and the outlet channel 20 may be collectively referred to as 'cells'. Further, in the present disclosure, it is exemplified that the housing has a cylindrical shape and the cells have a polygonal shape, but the shape of the housing and the shape of the cells are not limited to the exemplified shapes.

Referring now to FIGS. 2 and 3, the inlet channel 10 extends along the flow of the exhaust gas. A front end of the inlet channel 10 is opened, and as a result, the exhaust gas flows into the particulate filter 1 through the inlet channel 10. A rear end of the inlet channel 10 is plugged by a first plug 12. Accordingly, the exhaust gas in the particulate filter 1 may not flow out to the outside of the particulate filter 1 through the inlet channel 10.

The outlet channel 20 may extend according to the flow of the exhaust gas and be disposed in parallel to the inlet channel 10. One or more inlet channels 10 are positioned on the periphery of the outlet channel 20.

For example, when the cell has a quadrangular shape, the wall 30 surrounding the outlet channel 20 has four planes. At least one plane among the four planes is positioned between the outlet channel 20 and the inlet channel 10 neighboring thereto. When the cell has the quadrangular shape, the outlet channel 20 may be surrounded by 4 neighboring inlet channels 10 and the inlet channel 10 may be surrounded by 4 neighboring outlet channels 20, but the present disclosure is not limited thereto.

The front end of the outlet channel 20 is plugged by a second plug 22, and as a result, the exhaust gas may not flow into the particulate filter 1 through the outlet channel 20. The rear end of the outlet channel 20 is opened, and as a result, the exhaust gas in the particulate filter 1 flows out to the outside of the particulate filter 1 through the outlet channel 20.

The wall 30 is disposed between the inlet channel 10 and the outlet channel 20 which are neighboring to each other to define a boundary. The wall 30 may be a porous wall 30 having at least one micropore formed therein. The porous wall 30 makes the inlet channel 10 and the outlet channel 20 neighboring to each other be in fluidic communication with each other. Therefore, the exhaust gas that flows into the inlet channel 10 may move to the outlet channel 20 through the porous wall 30. Further, the porous wall 30 does not pass the particulate matter included in the exhaust gas. When the exhaust gas moves to the outlet channel 20 from the inlet channel 10 through the porous wall 30, the particulate matter included in the exhaust gas is filtered by the porous wall 30. The porous wall 30 may be manufactured, without limitation, from aluminum titanate, cordierite, silicon carbide, and the like, as well as mixtures thereof.

The porous wall 30 may be coated with a catalyst 50. The composition of catalyst 50 with which the porous wall 30 is coated is not limited. That is, according to a design intention, the wall 30 may be coated with various catalyst 50 compositions including, but not limited to, a lean NOx trap (LNT) catalyst, a triplex catalyst, an oxidation catalyst, a hydrocarbon trap catalyst, a selective catalytic reduction (SCR) catalyst, and the like. Further, the wall 30 may be coated with two kinds or more of catalysts 50. For example, an inner wall of the inlet channel 10 may be coated with the LNT catalyst and the inner wall of the outlet channel 20 may be coated with the SCR catalyst, but the present disclosure is not limited thereto.

The support 40 may be disposed in at least one of the inlet channel 10 and the outlet channel 20. Alternatively, the support 40 may be disposed only in the inlet channel 10 or disposed only in the outlet channel 20.

Referring now to FIG. 3, it is illustrated that the support 40 extends in parallel to a direction in which the inlet channel 10 and/or the outlet channel 20 extends, but the support 40 may have various shapes as known in example described below.

The support 40 is coated with the catalyst 50. The catalyst 50 composition with which the support 40 is coated is not limited. That is, according to the design intention, the support 40 may be coated with various catalyst compositions 50 including, without limitation, the lean NOx trap (LNT) catalyst, the triplex catalyst, the oxidation catalyst, the hydrocarbon trap catalyst, the selective catalytic reduction (SCR) catalyst, and the like. Further, the support 40 may be coated with two kinds or more of catalysts 50. For example, the support 40 may be sequentially coated with the LNT catalyst and the SCR catalyst, but the present disclosure is not limited thereto. Furthermore, one plane and the other plane of the support 40 may be coated with different kinds of catalysts 50. Further, a type of catalyst 50 with which the support 40 is coated may be the same as or different from that of catalyst 50 with which the wall 30 is coated.

Meanwhile, since the support 40 is not provided to play a role of a filter, but provided to hold the catalyst 50, the support 40 need not particularly be manufactured by a porous material. That is, the support 40 may be manufactured by the same material as or a different material from the porous wall 30. Although the support 40 is manufactured by the porous materials, since a pressure difference barely exists between both parts of the channel 10 or 20 partitioned by the support 40, the exhaust gas does not pass through the support but moves along the support 40 and the wall 30. Further, since the support 40 need not play the role of the filter, the support 40 need not be formed thick.

That is, the thickness of the support 40 is preferably formed to be smaller than that of the wall 30, and as a result, an increase in back pressure is minimized. When the support 40 is manufactured from the porous material, the surface of the support 40 and the micropore in the support 40 are coated with the catalyst composition 50. Alternatively, when the support 40 is manufactured from a non-porous material, the surface of the support 40 is coated with the catalyst 50.

As mentioned above, both of the support 40 and the porous wall 30 may be coated with the catalyst composition 50. In this case, the amount of the catalyst 50 with which the support 40 is coated may be larger than the amount of the catalyst 50 with which the porous wall 30 is coated. Since the porous wall 30 plays the role of the filter, the porous wall 30 may be thinly coated with the catalyst 50. However, since the support 40 need not play the role of the filter, the support 40 may be thickly coated with the catalyst 50. As a result, the amount of the catalyst with which the particulate filter 1 is coated may increase. Herein, the amount of the catalyst 50 means an amount of the catalyst coated per length or per area.

Hereinafter, shapes of various supports according to another aspect of the present disclosure will be described in detail with reference to the accompanying drawings. According to one of the present disclosure, it is described that the inlet channel and the outlet channel have the quadrangular shape as an example. However, the scope of the present disclosure is not limited to specific examples, drawings, and description.

The support 40 is disposed in the inlet channel 10 and the outlet channel 20 and positioned in at least one of at least one input channel 10 and at least one outlet channel 20.

First, a configuration of a support according to one aspect of the present disclosure will be described in detail. Referring to FIG. 3 a front view illustrating a partial inlet channel and a partial outlet channel of a catalyzed particulate filter is provided.

As illustrated in FIG. 3, the support 40 of the catalyzed particulate filter extends in a direction (hereinafter, a longitudinal direction') in which the inlet channel 10 and the outlet channel 20 extend. Further, the support 40 extends from any one plane of the porous wall 30 that partitions the inlet channel 10 or the outlet channel 20 to another plane other than a plane adjacent to the one plane. In this case, the support 40 may extend with total lengths of the inlet channel 10 and the outlet channel 20 or extend with partial lengths of the inlet channel 10 and the outlet channel 20. The support 40 may extend at the center of the porous wall 30 that partitions the inlet channel 10 and the outlet channel 20.

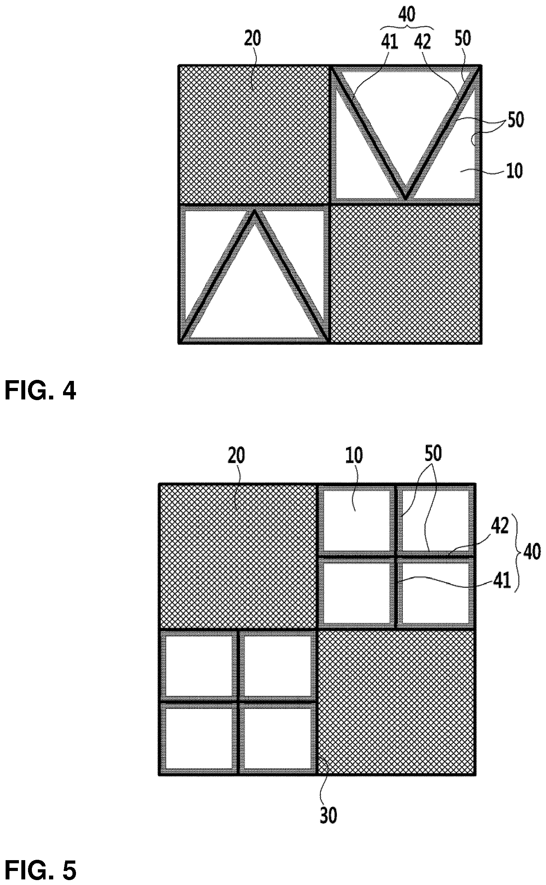

Next, a configuration of a support according to another aspect of the present invention will be described in detail. Referring now to FIG. 4, ia front view illustrating a partial inlet channel and a partial outlet channel of a catalyzed particulate filter is provided.

As illustrated in FIG. 4, the support 40 of the catalyzed particulate filter extends in the longitudinal direction and extends to another corner other than a corner formed on the any one plane from any one plane of the porous wall 30 that partitions the inlet channel 10 and the outlet channel 20. In this case, the support 40 may include multiple supports 41 and 42. When the inlet channel 10 or the outlet channel 20 has the quadrangular shape and two supports 40 are formed, the inlet channel 10 or the outlet channel 20 may be divided into three spaces by the support 40.

As described above, since a contact area (time) of the catalyst with which the support 40 is coated and the fluid (exhaust gas) increases, a purification rate of the fluid (exhaust gas) may be increased and further, the increase in back pressure may be minimized.

Next, a configuration of a support according to yet another aspect of the present invention will be described in detail. Referring now to FIG. 5, a front view illustrating a partial inlet channel and a partial outlet channel of a catalyzed particulate filter is provided.

As illustrated in FIG. 5, the support 40 of the catalyzed particulate filter includes a first support 41 which extends in the longitudinal direction and extends from any one plane to the any one plane and the other plane of the porous wall 30 that partitions the inlet channel 10 and the outlet channel 20 and a second support 42 which extends in the longitudinal direction and extends from the any one plane and the other plane to the other plane and another plane. In this case, the first support 41 and the second support 42 may be formed to cross each other.

When the inlet channel 10 or the outlet channel 20 has the quadrangular shape, the inlet channel 10 or the outlet channel 20 may be divided into four spaces by the first support 41 and the second support 42. The first support 41 may extend from the center of any one plane of the porous wall 30 to the centers of the any one plane and the other plane. The second support 42 may extend from the centers of any one plane and the other plane of the porous wall 30 to the centers of the other plane and another plane.

As described above, the support 40 includes the first support 41 and the second support 42 to increase an area of the support 40 disposed in the inlet channel 10 or the outlet channel 20, and as a result, since the contact area (time) of the catalyst with which the support 40 is coated and the fluid (exhaust gas) increases, the purification rate of the exhaust gas may increase.

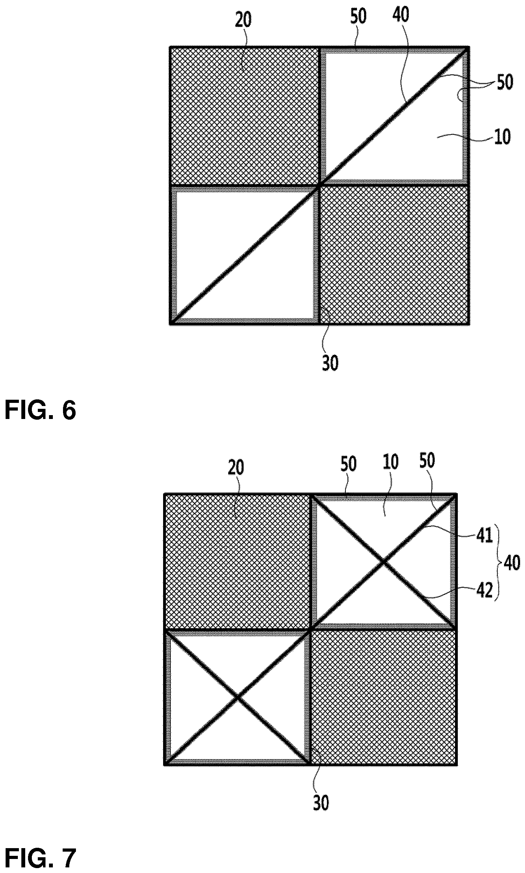

Next, a configuration of a support according to yet another aspect of the present invention will be described in detail. Referring now to FIG. 6, a front view illustrating a partial inlet channel and a partial outlet channel of a catalyzed particulate filter is provided.

As illustrated in FIG. 6, the support 40 of the catalyzed particulate filter may extend in the longitudinal direction and extend to the other corner other than a corner sharing a plane with the any one corner from any one corner of the porous wall 30 that partitions the inlet channel 10 or the outlet channel 20. For example, when the inlet channel 10 or the outlet channel 20 has the quadrangular shape, the support 40 may extend in a diagonal direction of the porous wall 30.

The support 40 may extend with the total lengths of the inlet channel 10 and the outlet channel 20 or extend with the partial lengths of the inlet channel 10 and the outlet channel 20.

Next, a configuration of a support according to another aspect of the present disclosure will be described in detail. Referring now to FIG. 7, a front view illustrating a partial inlet channel and a partial outlet channel of a catalyzed particulate filter is provided.

As illustrated in FIG. 7, the support 40 of the catalyzed particulate filter includes a first support 41 which extends in the longitudinal direction and extends to the other sharing a plane with the any one corner from any one corner of the porous wall 30 that partitions the inlet channel 10 and the outlet channel 20 and a second support 42 which extends from the any one corner and the other corner to another corner other than a corner sharing a plane with the other corner. In this case, the first support 41 and the second support 42 cross each other. That is, multiple supports 41 and 42 are provided in the diagonal direction of the porous wall 30 that partitions the inlet channel 10 or the outlet channel 20 having the polygonal shape.

The support 40 may extend with the total lengths of the inlet channel 10 and the outlet channel 20 or extend with the partial lengths of the inlet channel 10 and the outlet channel 20.

As described above, the support 40 includes the first support 41 and the second support 42 to increase an area of the support 40 disposed in the inlet channel 10 or the outlet channel 20, and as a result, since the contact area (time) of the catalyst with which the support 40 is coated and the fluid (exhaust gas) increases, the purification rate of the exhaust gas may increase.

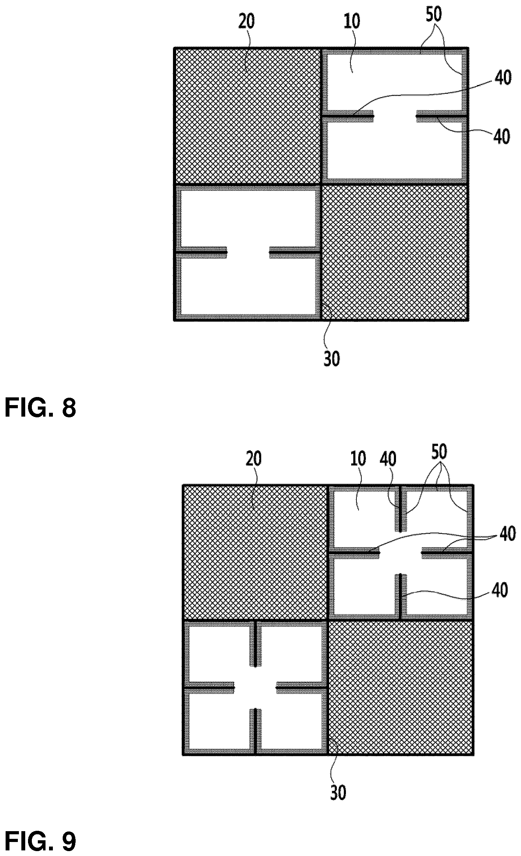

Next, a configuration of a support according to still another aspect of the present disclosure will be described in detail. Referring now to FIG. 8, a front view illustrating a partial inlet channel and a partial outlet channel of a catalyzed particulate filter is provided.

As illustrated in FIG. 8, the support 40 of the catalyzed particulate filter extends in the longitudinal direction and extends with a predetermined length at the center of any one plane of the porous wall 30 that partitions the inlet channel 10 or the outlet channel 20 and extends with a predetermined length at the centers of the any one plane and the other plane of the inlet channel 10 or the outlet channel 20. In this case, any one plane and the other plane of the porous wall 30 may be planes facing each other.

The support 40 may extend with the total lengths of the inlet channel 10 and the outlet channel 20 or extend with the partial lengths of the inlet channel 10 and the outlet channel 20.

That is, the support 40 that extends at the center of any one plane of the porous wall 30 and the support 40 that extends at the center of the other one plane are not connected to each other. In this regard, since the contact area (time) of the catalyst with which the support 40 is coated and the fluid (exhaust gas) increases, the purification rate of the exhaust gasmay increase and further, the increase in back pressure may be minimized.

Next, a configuration of a support according to another aspect of the present invention will be described in detail. Referring now to FIG. 9, a front view illustrating a partial inlet channel and a partial outlet channel of a catalyzed particulate filter is provided.

As illustrated in FIG. 9, the support 40 of the catalyzed particulate filter extends in the longitudinal direction and extends with a predetermined length on respective planes of the porous wall 30 that partitions the inlet channel 10 or the outlet channel 20. In this case, the respective supports 40 do not cross each other or are not connected to each other.

The support 40 may extend with the total lengths of the inlet channel 10 and the outlet channel 20 or extend with the partial lengths of the inlet channel 10 and the outlet channel 20.

As described above, since the respective supports 40 do not cross each other or are not connected to each other and the contact area (time) of the catalyst with which the support 40 is coated and the fluid (exhaust gas) thus increases, the purification rate of the exhaust gasmay increase and simultaneously, the increase in back pressure may be minimized.

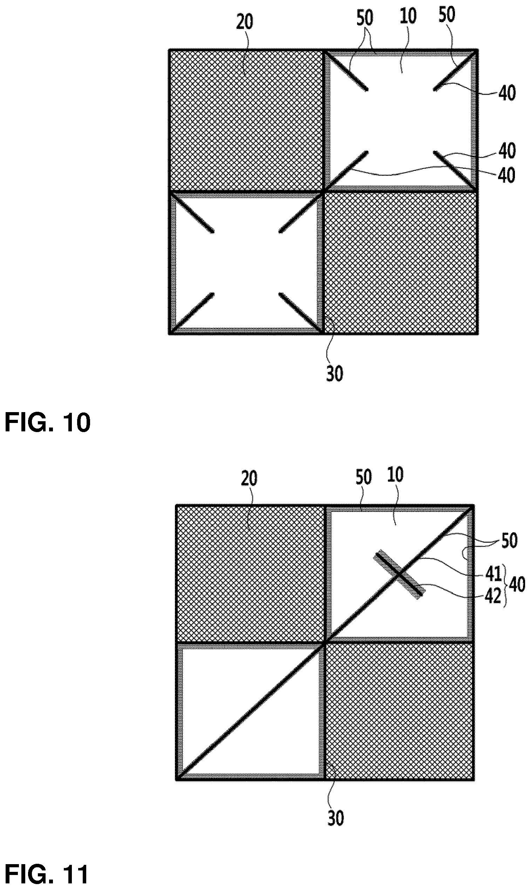

Next, a configuration of a support according to yet another aspect of the present invention will be described in detail. Referring now to FIG. 10 is a front view illustrating a partial inlet channel and a partial outlet channel of a catalyzed particulate filter is provided.

As illustrated in FIG. 10, the support 40 of the catalyzed particulate filter extends in the longitudinal direction and extends with a predetermined length on respective corners of the porous wall 30 that partitions the inlet channel 10 or the outlet channel 20. In this case, the respective supports 40 do not cross each other or are not connected to each other.

The support 40 may extend with the total lengths of the inlet channel 10 and the outlet channel 20 or extend with the partial lengths of the inlet channel 10 and the outlet channel 20.

As described above, since the respective supports 40 do not cross each other or are not connected to each other and the contact area (time) of the catalyst with which the support 40 is coated and the fluid (exhaust gas) thus increases, the purification rate of the exhaust gas may increase and simultaneously, the increase in back pressure may be minimized.

Next, a configuration of a support according to yet another aspect of the present invention will be described in detail. Referring now to FIG. 11, a front view illustrating a partial inlet channel and a partial outlet channel of a catalyzed particulate filter is provided.

As illustrated in FIG. 11, the support 40 of the catalyzed particulate filter includes a first support 41 which extends in the longitudinal direction and extends from any one corner of the porous wall 30 that partitions the inlet channel 10 or the outlet channel 20 to the other corner other than a corner sharing a plane with the any one corner and a second support 42 which extends to both sides of the first support 41 with a predetermined length. In this case, the second support 42 may extend at the center of the first support 41 with a predetermined length.

As described above, since the support 40 includes the first support 41 and the second support 42 and the contact area (time) of the catalyst with which the support 40 is coated and the fluid (exhaust gas) thus increases, the purification rate of the exhaust gas may increase and further, the increase in back pressure may be minimized.

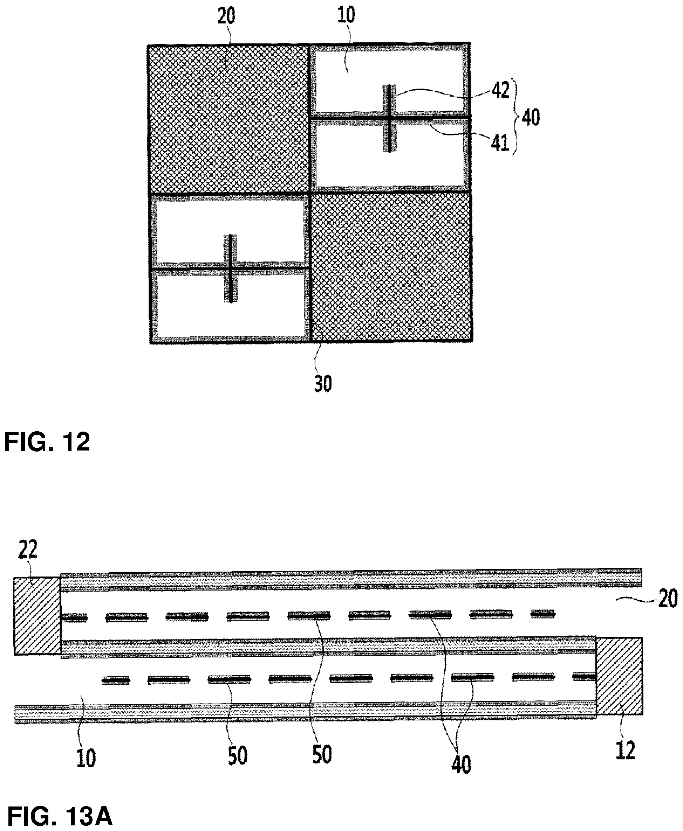

Next, a configuration of a support according to another aspect of the present disclosure will be described in detail. Referring now to FIG. 12, a front view illustrating a partial inlet channel and a partial outlet channel of a catalyzed particulate filter is provided.

As illustrated in FIG. 12, the support 40 of the catalyzed particulate filter includes a first support 41 which extends in the longitudinal direction and extends from any one plane of the porous wall 30 that partitions the inlet channel 10 or the outlet channel 20 to the other plane other than a plane adjacent to the any one plane and a second support 42 which extends to both sides of the first support 41 with a predetermined length. In this case, the second support 42 may extend at the center of the first support 41 with a predetermined length.

As described above, since the support 40 includes the first support 41 and the second support 42 and the contact area (time) of the catalyst with which the support 40 is coated and the fluid (exhaust gas) thus increases, the purification rate of the exhaust gas may increase and further, the increase in back pressure may be minimized.

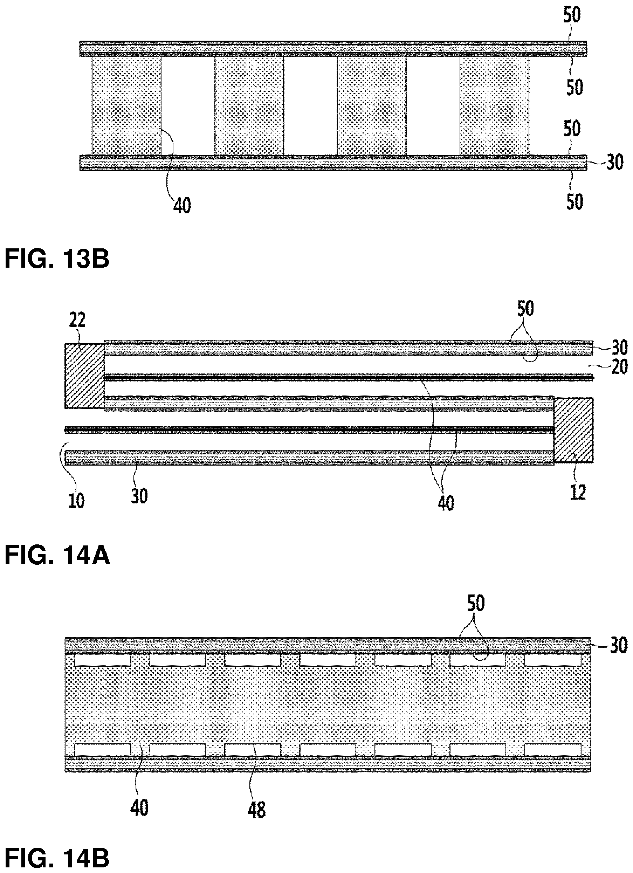

Next, a configuration of a support according to still another aspect of the present disclosure will be described in detail. Referring now to FIGS. 13A and 13B, cross-sectional views of a catalyzed particulate filter are provided.

As illustrated in FIGS. 13A and 13B, the support 40 of the catalyzed particulate filter extends in the longitudinal direction and is formed to be spaced apart at a predetermined interval. That is, the multiple supports 40 are provided and the multiple supports 40 may be disposed to be spaced apart from each other at a predetermined interval in the longitudinal direction of the inlet channel 10 or the outlet channel 20.

As described above, since the multiple supports 40 are disposed to be spaced apart from each other at a predetermined interval and the contact area (time) of the catalyst with which the support 40 is coated and the fluid (exhaust gas) thus increases, the purification rate of the exhaust gas may increase and simultaneously, the increase in back pressure may be minimized.

Last, a configuration of a support according to another aspect of the present disclosure will be described in detail. Referring now to FIGS. 14A and 14B, cross-sectional views of a catalyzed particulate filter are provided.

As illustrated in FIGS. 14A and 14B, the support 40 of the catalyzed particulate filter extends in the longitudinal direction and communication holes are formed in a part of the support 40 which contacts the porous wall 30 that partitions the inlet channel 10 or the outlet channel 20 at a predetermined interval.

As described above, since the increase in back pressure may be minimized due to the multiple communication holes formed in the support 40 and the contact area (time) of the catalyst with which the support 40 is coated and the fluid (exhaust gas) increases, the purification rate of the exhaust gas may increase.

## Claims

1. A catalyzed particulate filter (1) comprising:
at least one inlet channel (10) having one end into which a fluid flows and the other end which is plugged, and extending in a longitudinal direction;
at least one outlet channel (20) having one end which is plugged and the other end into which the fluid flows, and extending in the longitudinal direction;
at least porous wall (30) defining a boundary between the inlet channel (10) and the outlet channel (20) which are neighboring to each other and extending in the longitudinal direction; and
a support (40) coated with a catalyst (50) thereon,
wherein the inlet channel (10) and the outlet channel (20) have a polygonal shape and at least one support (40) is disposed in at least one of at least one inlet channel (10) and at least one outlet channel (20);
the catalyzed particulate filter (1) being **characterized in that** the support (40) extends in the longitudinal direction and communication holes are formed in a part of the support which contacts the porous wall (30) that partitions the inlet channel (10) or the outlet channel (20) at a predetermined interval.

2. The catalyzed particulate filter (1) of claim 1, wherein the support (40) extends from any one plane of the porous wall (30) that partitions the inlet channel (10) or the outlet channel (20) to another plane other than a plane adjacent to the any one plane.

3. The catalyzed particulate filter (1) of claim 1, wherein the support (40) extends from any one plane of the porous wall (30) that partitions the inlet channel (10) or the outlet channel (20) to another corner other than a corner formed on the any one plane.

4. The catalyzed particulate filter (1) of claim 1, wherein the support (40) extends from any one corner of the porous wall (30) that partitions the inlet channel (10) or the outlet channel (20) to another corner other than a corner sharing a plane with the any one corner.

5. The catalyzed particulate filter (1) of claim 1, wherein multiple supports (40) are provided in a diagonal direction of the porous wall (30) that partitions the inlet channel (10) or the outlet channel (20).

6. The catalyzed particulate filter (1) of claim 1, wherein the support (40) extends with a predetermined length from any one plane of the porous wall (30) that partitions the inlet channel (10) or the outlet channel (20), and from another plane facing the any one plane.

7. The catalyzed particulate filter (1) of claim 1, wherein the support (40) extends from respective planes of the porous wall (30) that partitions the inlet channel (10) or the outlet channel (20) with a predetermined length.

8. The catalyzed particulate filter (1) of claim 1, wherein the support (40) extends from respective corners of the porous wall (30) that partitions the inlet channel (10) or the outlet channel (20) with a predetermined length.

9. The catalyzed particulate filter (1) of claim 1, wherein the support (40) includes:
a first support (41) which extends in the longitudinal direction and extends from any one corner of the porous wall (30) that partitions the inlet channel (10) or the outlet channel (20) to another corner other than a corner sharing a plane with the any one corner, and
a second support (42) which extends to both sides of the first support (41) with a predetermined length.

10. The catalyzed particulate filter (1) of claim 1, wherein the support (40) includes:
a first support (41) which extends in the longitudinal direction and extends from any one plane of the porous wall (30) that partitions the inlet channel (10) or the outlet channel (20) to another plane other than a plane adjacent to the any one plane, and
a second support (42) which extends to both sides of the first support (41) with a predetermined length.

11. The catalyzed particulate filter (1) of claim 1, wherein the support (40) is formed to be spaced apart at a predetermined interval in the longitudinal direction.

12. The catalyzed particulate filter (1) of claim 1, wherein the support (40) is positioned in at least one of the one or more inlet channels (10) and positioned in at least one of the one or more outlet channels (20) or positioned only in at least one of the one or more inlet channels (10) or positioned only in at least one of the one or more outlet channels (20).

## Patentansprüche

1. Ein katalysierter Partikelfilter (1), aufweisend:
mindestens einen Einlasskanal (10), der ein Ende, in das ein Fluid strömt, und das andere Ende aufweist, das blockiert ist, und der sich in einer Längsrichtung erstreckt,
mindestens einen Auslasskanal (20), der ein Ende, das blockiert ist, und das andere Ende aufweist, in das das Fluid strömt, und der sich in der Längsrichtung erstreckt,
mindestens eine poröse Wand (30), die eine Grenze zwischen dem Einlasskanal (10) und dem Auslasskanal (20) definiert, die benachbart zueinander sind, und die sich in der Längsrichtung erstreckt, und
eine Stütze (40), die mit einem Katalysator (50) darauf beschichtet ist,
wobei der Einlasskanal (10) und der Auslasskanal (20) eine polygonale Form haben und mindestens eine Stütze (40) in mindestens einem von mindestens einem Einlasskanal (10) und mindestens einem Auslasskanal (20) angeordnet ist,
wobei der katalysierte Partikelfilter (1) **dadurch gekennzeichnet ist, dass**
sich die Stütze (40) in der Längsrichtung erstreckt und Kommunikationslöcher in einem Teil der Stütze, der die poröse Wand (30) kontaktiert, die den Einlasskanal (10) oder den Auslasskanal (20) aufteilt, in einem vorbestimmten Abstand ausgebildet sind.

2. Der katalysierte Partikelfilter (1) gemäß Anspruch 1, wobei sich die Stütze (40) von irgendeiner Ebene der porösen Wand (30), die den Einlasskanal (10) oder den Auslasskanal (20) aufteilt, zu einer anderen Ebene anders als eine Ebene benachbart zu der irgendeinen Ebene erstreckt.

3. Der katalysierte Partikelfilter (1) gemäß Anspruch 1, wobei sich die Stütze (40) von irgendeiner Ebene der porösen Wand (30), die den Einlasskanal (10) oder den Auslasskanal (20) aufteilt, zu einer anderen Ecke anders als eine Ecke, die auf der irgendeinen Ebene ausgebildet ist, erstreckt.

4. Der katalysierte Partikelfilter (1) gemäß Anspruch 1, wobei sich die Stütze (40) von irgendeiner Ecke der porösen Wand (30), die den Einlasskanal (10) oder den Auslasskanal (20) aufteilt, zu einer anderen Ecke anders als eine Ecke erstreckt, die eine Ebene mit der irgendeinen Ecke teilt.

5. Der katalysierte Partikelfilter (1) gemäß Anspruch 1, wobei mehrere Stützen (40) in einer diagonalen Richtung der porösen Wand (30) vorgesehen sind, die den Einlasskanal (10) oder den Auslasskanal (20) aufteilt.

6. Der katalysierte Partikelfilter (1) gemäß Anspruch 1, wobei sich die Stütze (40) mit einer vorbestimmten Länge von irgendeiner Ebene der porösen Wand (30), die den Einlasskanal (10) oder den Auslasskanal (20) aufteilt, und von einer anderen Ebene aus erstreckt, die der irgendeinen Ebene zugewandt ist.

7. Der katalysierte Partikelfilter (1) gemäß Anspruch 1, wobei sich die Stütze (40) von jeweiligen Ebenen der porösen Wand (30), die den Einlasskanal (10) oder den Auslasskanal (20) aufteilt, mit einer vorbestimmten Länge erstreckt.

8. Der katalysierte Partikelfilter (1) gemäß Anspruch 1, wobei sich die Stütze (40) von jeweiligen Ecken der porösen Wand (30), die den Einlasskanal (10) oder den Auslasskanal (20) aufteilt, mit einer vorbestimmten Länge erstreckt.

9. Der katalysierte Partikelfilter (1) gemäß Anspruch 1, wobei die Stütze (40) aufweist:
eine erste Stütze (41), die sich in der Längsrichtung erstreckt und sich von irgendeiner Ecke der porösen Wand (30), die den Einlasskanal (10) oder den Auslasskanal (20) aufteilt, zu einer anderen Ecke anders als eine Ecke, die eine Ebene mit der irgendeinen Ecke teilt, erstreckt, und
eine zweite Stütze (42), die sich mit einer vorbestimmten Länge zu beiden Seiten der ersten Stütze (41) erstreckt.

10. Der katalysierte Partikelfilter (1) gemäß Anspruch 1, wobei die Stütze (40) aufweist:
eine erste Stütze (41), die sich in der Längsrichtung erstreckt und sich von irgendeiner Ebene der porösen Wand (30), die den Einlasskanal (10) oder den Auslasskanal (20) aufteilt, zu einer anderen Ebene anders als eine Ebene benachbart zu der irgendeinen Ebene erstreckt, und
eine zweite Stütze (42), die sich mit einer vorbestimmten Länge zu beiden Seiten der ersten Stütze (41) erstreckt.

11. Der katalysierte Partikelfilter (1) gemäß Anspruch 1, wobei die Stütze (40) ausgebildet ist, um in der Längsrichtung in einem vorbestimmten Abstand angeordnet zu sein.

12. Der katalysierte Partikelfilter (1) gemäß Anspruch 1, wobei die Stütze (40) in mindestens einem von dem einen oder den mehreren Einlasskanälen (10) positioniert ist und in mindestens einem von dem einen oder den mehreren Auslasskanälen (20) positioniert ist oder nur in mindestens einem von dem einen oder den mehreren Einlasskanälen (10) positioniert ist oder nur in mindestens einem von dem einen oder den mehreren Auslasskanälen (20) positioniert ist.

## Revendications

1. Filtre à particules catalytique (1) qui comprend :
au moins un canal d'admission (10) ayant une extrémité dans laquelle un fluide circule et l'autre extrémité qui est bouchée, et qui s'étend dans une direction longitudinale ;
au moins un canal d'évacuation (20) ayant une extrémité qui est bouchée et l'autre extrémité dans laquelle le fluide circule, et qui s'étend dans la direction longitudinale ;
au moins une paroi poreuse (30) qui définit une limite entre le canal d'admission (10) et le canal d'évacuation (20) qui sont adjacents et qui s'étendent dans la direction longitudinale ; et
un support (40) recouvert d'un catalyseur (50),
dans lequel le canal d'admission (10) et le canal d'évacuation (20) ont une forme polygonale, et dans lequel au moins un support (40) est disposé dans l'un au moins parmi au moins un canal d'admission (10) et au moins un canal d'évacuation (20) ;
le filtre à particules catalytique (1) étant **caractérisé en ce que**
le support (40) s'étend dans la direction longitudinale et des orifices de communication sont formés dans une partie du support qui est en contact avec la paroi poreuse (30) qui sépare le canal d'admission (10) ou le canal d'évacuation (20) selon un intervalle prédéterminé.

2. Filtre à particules catalytique (1) selon la revendication 1, dans lequel le support (40) s'étend entre un plan quelconque de la paroi poreuse (30) qui sépare le canal d'admission (10) ou le canal d'évacuation (20) et un autre plan différent d'un plan adjacent audit plan quelconque.

3. Filtre à particules catalytique (1) selon la revendication 1, dans lequel le support (40) s'étend entre un plan quelconque de la paroi poreuse (30) qui sépare le canal d'admission (10) ou le canal d'évacuation (20) et un autre angle différent d'un angle formé sur ledit plan quelconque.

4. Filtre à particules catalytique (1) selon la revendication 1, dans lequel le support (40) s'étend entre un angle quelconque de la paroi poreuse (30) qui sépare le canal d'admission (10) ou le canal d'évacuation (20) et un autre angle différent d'un angle qui partage un plan avec ledit angle quelconque.

5. Filtre à particules catalytique (1) selon la revendication 1, dans lequel plusieurs supports (40) sont prévus dans une direction diagonale de la paroi poreuse (30) qui sépare le canal d'admission (10) ou le canal d'évacuation (20).

6. Filtre à particules catalytique (1) selon la revendication 1, dans lequel le support (40) s'étend selon une longueur prédéterminée depuis un plan quelconque de la paroi poreuse (30) qui sépare le canal d'admission (10) ou le canal d'évacuation (20), et depuis un autre plan faisant face audit plan quelconque.

7. Filtre à particules catalytique (1) selon la revendication 1, dans lequel le support (40) s'étend depuis des plans respectifs de la paroi poreuse (30) qui sépare le canal d'admission (10) ou le canal d'évacuation (20) selon une longueur prédéterminée.

8. Filtre à particules catalytique (1) selon la revendication 1, dans lequel le support (40) s'étend depuis les angles respectifs de la paroi poreuse (30) qui sépare le canal d'admission (10) ou le canal d'évacuation (20) selon une longueur prédéterminée.

9. Filtre à particules catalytique (1) selon la revendication 1, dans lequel le support (40) comprend :
un premier support (41) qui s'étend dans la direction longitudinale et s'étend entre un angle quelconque de la paroi poreuse (30) qui sépare le canal d'admission (10) ou le canal d'évacuation (20) et un autre angle différent d'un angle qui partage un plan avec ledit angle quelconque, et
un second support (42) qui s'étend vers les deux côtés du premier support (41) selon une longueur prédéterminée.

10. Filtre à particules catalytique (1) selon la revendication 1, dans lequel le support (40) comprend :
un premier support (41) qui s'étend dans la direction longitudinale et s'étend entre un plan quelconque de la paroi poreuse (30) qui sépare le canal d'admission (10) ou le canal d'évacuation (20) et un autre plan différent d'un plan adjacent audit plan quelconque, et
un second support (42) qui s'étend vers les deux côtés du premier support (41) selon une longueur prédéterminée.

11. Filtre à particules catalytique (1) selon la revendication 1, dans lequel le support (40) est formé pour être espacé selon un intervalle prédéterminé dans la direction longitudinale.

12. Filtre à particules catalytique (1) selon la revendication 1, dans lequel le support (40) est positionné dans l'un au moins du ou des canaux d'alimentation (10) et positionné dans l'un au moins du ou des canaux d'évacuation (20), ou est positionné uniquement dans l'un au moins du ou des canaux d'alimentation (10) ou positionné uniquement dans l'un au moins du ou des canaux d'évacuation (20).
